# EUROPEAN PATENT APPLICATION

(11) **EP 3 644 178 A1**
(43) Date of publication of application: **29.04.2020**
(21) Application number: 18202635.1
(22) Date of filing: 25.10.2018
(51) Int. Cl.: G06F 8/36, G06F 8/60

(54) **INSTALLING SOFTWARE COMPONENTS TO CONTROLLERS OF INDUSTRIAL SITES**

(71) Applicant: ABB Schweiz AG, 5400 Baden (CH)
(72) Inventor: Koziolek, Heiko, 76227 Karlsruhe (DE); Rodriguez, Pablo, 68549 Ilvesheim (DE); Harding, Jeffrey, Holly Springs, NC 27540 (US)

(57) **Abstract**

A deployment computer (100) enables the installation of controller software to controllers (200-1, 200-2, 200-3). The computer (100) receives installation indicators with attributes, being function indicators to identify functions for the controllers and software status indicators to identify a current status of the controller software of the controllers.

The deployment computer processes the function attributes and the software status attributes to identify the software components that are required by the controllers to implement the functions. The deployment computer follows a hierarchical sequence starting with attributes of the automation system and ending with attributes for the one or more particular controllers. The deployment computer (100) forwards instructions that enable the installation of software components on the controllers. The deployment computer (100) can also forward the instructions to virtualization system in that the controllers are being emulated by virtual machines.

## Description

### Technical Field

In general, the disclosure relates to computer-assisted activities, and more in particular, the disclosure relates to configuring computer controllers for industrial sites by installing controller software.

### Background

Industrial sites comprise technical equipment to perform industrial processes. Controllers are computers that control such processes. Simplified, the controllers have inputs to receive data that relates to the equipment and have outputs for signals to control the equipment.

The controllers comprise one or more hardware components, among them processor units and memory units. The controller software (that is stored by the memory units) can be differentiated into several layers, such as firmware, basic input/output system (BIOS), operating system (OS), execution engine (EE), control logic (CL) and other layers.

The controllers need to be configured and programmed prior to use, usually by selecting and adapting the software. Despite standardization in some areas (e.g., OS, programming language of the CL etc.), complexity is dictated by different industrial domains, by different software that is pre-installed on the controller, by different hardware components, etc.

Malfunction of the controllers can cause substantial damage to the equipment, to the operation of the site, to the safety of the human operators and so on. It is self-explaining that configuring and programming has to be accompanied by testing. In other words, testing the operation of the controller (with its controller software) is mandatory.

In view of the complexity, selecting and adapting the software is computer-assisted. However, in many scenarios the engineers write control logic CL for the controller of an industrial site without re-using code. Even if the engineers use (or rather "re-use") control logic from libraries, there is a need to select the code for the applicable domain, to adapt the control logic for use in particular sites, and for particular controllers etc. The installation (of the control logic) can be performed manually, by an expert user in the role of the so-called control engineer. This user arranges to select and adapt the software (from libraries) and uploads it to the controllers.

There is a need to further reduce complexity, or - at least - to shield complexity from the computer users.

### Summary

According to embodiments of the present invention, a computer-implemented method enables the installation of controller software to a plurality of controllers. The controllers are computers that are adapted to control the operation of an automation system according to the controller software. The method is performed by a deployment computer.

In a receiving step, the deployment computer receives installation indicators with attributes. Some indicators are (a) function indicators with function attributes that identify functions for the controllers within the automation system. Other indicators are (b) software status indicators with software status attributes that identify a current status of the controller software in the plurality of controllers.

In an applying (a plurality of) rules step, the deployment computer processes the function attributes and the software status attributes to identify the software components that are required by the controllers to implement the functions. Thereby, the deployment computer applies the rules in a hierarchical sequence starting with attributes of the automation system and ending with attributes for the one or more particular controllers.

In a forwarding instructions step, the deployment computer forwards instructions to the controllers. The instructions enable the installation of software components on the controllers. Forwarding depends on the availability of the identified software components at the controllers according to the status attributes in the software status indicators. There is no need to re-install software components. If a required software component is already installed on a particular controller, it is usually not being installed again.

Complexity is reduced, or at least shielded from the control engineer users. The users can look at system-specific attributes only once and do not have to manually deal with topics such as pre-installed software or different controller hardware. The control engineers will have more time to look at the function of the controllers.

Optionally, receiving comprises to receive the function indicator from a project plan repository that stores a project plan for the automation system and that differentiates between the controllers of the automation system.

Optionally, receiving further comprises to receive further function indicators through a user interface of the deployment computer from a user.

Optionally, receiving comprises to receive the software status indicators by: communicatively coupling the deployment computer to the controllers via a communication link; and interrogating the controllers.

Optionally, receiving comprises to receive the software status indicators with a layer indicator that indicates one or more layers of the control software that are installed on the controllers.

Optionally, the layer indicator has attributes with one or more of the following: an operating system attribute that indicates the presence or absence of a particular operating system on the controllers, an execution engine attribute that indicates the presence or absence of a particular execution engine on the controllers, and a control logic attribute that indicates the presence of absence of a particular control logic on the controllers.

Optionally, receiving comprises to receive hardware indicators, with attributes selected from the following: a memory attribute that represents the amount of random-access memory that is available to a particular controller, a storage attribute that represents the amount of non-volatile storage memory that is available to the particular controller, a communication attribute that represents the availability of communication of the particular controller by specifying communication bandwidth and/or communication protocols, and a processing attribute that represents the number of processing units of the particular controller.

Optionally, receiving comprises to receive system indicators for a particular automation system, wherein the indicators are applicable to the controllers of the particular automation system by indicating a particular domain (of the automation system).

Optionally, forwarding instructions to the controller is performed upon checking compliance of the following: the availability of a sub-ordinated instruction layer on the controllers according to the software status attributes; and the availability of hardware resources, according to at least one of a memory attribute, a storage attribute, a communication attribute or a processing attribute.

Optionally, before forwarding the instructions to the controllers, the deployment computer sends the instructions to a virtualization system. That system comprises virtual machines and data-structures for emulation. The virtual machines correspond to the controllers to emulate the behavior of the controllers.

Optionally, the deployment computer instructs the plurality of virtual machines prior to forwarding the instructions to the controllers. Optionally, the deployment computer performs the interrogating step and subsequently forwards hardware status indictors relating to the resources of the controllers to the virtual machines as parameter settings.

A computer program product - when loaded into a memory of a computer and being executed by at least one processor of the computer - performs the steps of the computer-implemented method.

A deployment computer for installing controller software to a plurality of controllers is adapted to perform the computer-implemented method.

### Brief Description of the Drawings

FIG. 1 illustrates a simplified example of an industrial site with a technical system;
FIG. 2 illustrates an overview to a deployment computer, to controllers and to equipment, and thereby differentiates between an installation phase and an operation phase;
FIG. 3 illustrates an overview to the deployment computer and to a controller, during the installation phase;
FIG. 4 illustrates the controller within the system during the operation phase;
FIG. 5 illustrates the system with a plurality of controllers;
FIG. 6 illustrates the process of selecting software by way of example, at particular points in time;
FIG. 7 illustrates the deployment computer and a plurality of systems in different domains, wherein the deployment computer installs controller software such that the controllers are being configured according to the domains;
FIG. 8 illustrates the deployment computer and the system with a plurality of controllers, wherein the deployment computer installs software in different layers;
FIG. 9 illustrates the deployment computer and the system with a plurality of different controllers;
FIG. 10 illustrates the deployment computer and a plurality of controllers, wherein the controllers are different in their hardware;
FIG. 11 illustrates a controller that controls a plurality of equipment components, in the example a pump and a heater;
FIG. 12 illustrates the deployment computer and the controller, wherein the relation between the controller and the other system components is distinguished into different cases;
FIG. 13 illustrates the deployment computer interrogating the controller to receive installation attributes; and
FIG. 14 illustrates a computer-implemented method for updating controller software of the controllers.

### Detailed Description

### Introduction

### 1

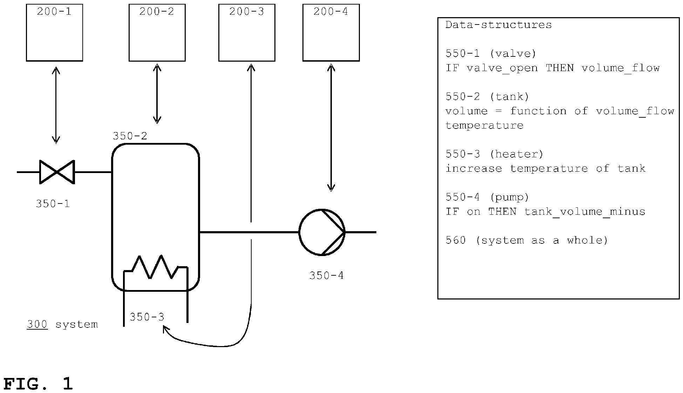

FIG. 1 illustrates a simplified example of an industrial site with technical system 300. System 300 comprises equipment components 350 and controllers 200. In the example, system 300 comprises:
- valve 350-1 controlled by valve controller 200-1,
- tank 350-2 controlled by tank controller 200-2,
- heater 350-3 controlled by heater controller 200-3, and
- pump 350-4 controlled by pump controller 200-4.

Controllers 200-1, 200-2, 200-3, and 200-4 communicate through a network or otherwise (not illustrated). For the example, there should be an overall task to keep a liquid in the tank within pre-defined minimum and maximum values for volume and for temperature. The tank controller forwards measurement data to the valve controller, to the pump controller and to the heater controller. Control loops are implemented for the volume and for the temperature.

The figure illustrates technical system 300 by symbols (for the equipment component) and by lines (for physical connections between the components, in the example, the flow of the liquid through pipes). In a process called "engineering", engineers move the symbols and the lines (and other graphical elements) to arrive at a graphical representation of system 300 as it should be operational in the future. Engineering is computer-assisted by engineering tools.

As used herein for simplicity, FIG. 1 does not illustrate properties of the equipment components, such as a rated volume flow for the valve, a rated volume for the tank etc. The properties can be available from catalogues in that the equipment is classified by types.

The engineering tools also allow obtaining data-structures 550/560 that represent equipment components 350 separately as well as the interaction between equipment components 350 within system 300. The data-structures represent function and structure (of 350/300). The granularities can vary. There can be data-structures 550-1, 550-2 etc. - collectively 550 - for individual equipment components and/or data-structure 560 that is applicable for system 300 as a whole.

Engineering tools are commercially available, for example as CAD-tools, such as "Control Builder M", or "Composer Harmony" (both available from ABB). It is noted that during engineering, hardware (i.e. controllers and/or technical equipment) of system 300 is not required.

It is noted that the representation of system 300 by the symbolic graphs (as on the left side) and of data-structures 550/560 (as on the right side) can be equivalent. For system 300 being engineered, both the graph and the data-structures are considered to be "project plans".

To illustrate the data-structures, FIG. 1 uses pseudo-code.
- Data structure 550-1 "IF valve_open THEN volume_flow" represents the physical behavior (i.e., function) of a valve that lets the liquid flow if open.
- Data-structure 550-2 "volume = function of volume_flow" represents the property of the tank to contain liquid in a volume that can be changed, by incoming flow or by outgoing flow.
- Data-structure 550-3 "increase temperature of tank" represents that the heater - if operating - heats up the liquid in the tank.
- Data-structure 550-4 "IF on THEN tank_volume_minus" simply represents that the pump (here connected to an output of the tank) can reduce the liquid volume. In this case, the data-structure considers the interconnection between equipment components. The pump is directed to remove liquid, but in different settings (different data-structure), the pump can be used to add liquid.

Taking an example for the overall system, data-structure 560 can comprise a formula to calculate a temperature change of the liquid based on the volume (in cubic meters) and a heat flow rate (e.g., in joule per second). Data-structure 560 (or data-structures 550) can also comprise formulas and/or numeric values to represent the heat flow rate (e.g. from the heater) and a volume flow (e.g., from the valve).

However, having data-structures 550/560 (i.e. the project plan, with even more details in real world scenarios) does not yet make system 300 operative. The controllers need to be configured as well, for example by installing software that corresponds to the data-structures.

### 2

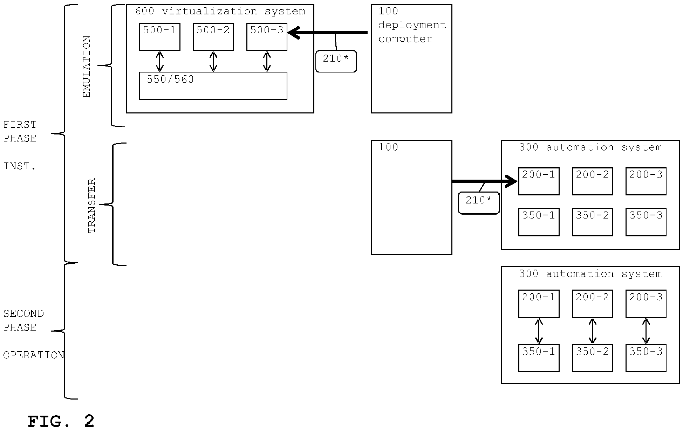

FIG. 2 illustrates the overview to controllers 200-1, 200-2 and 200-3 and to equipment components 350-1, 350-2 and 350-3. As in FIG. 1, the controllers and the equipment components belong to automation system 300 being a technical system.

The controllers are computers for controlling automation system 300. In the figure, the number N = 3 for controllers and equipment is simplified in correspondence to FIG. 1 for valve 350-1, tank 350-2 and heater 350-3. (The pump is left out here, only for simplicity).

Assuming that the mentioned project plan is already available in computer-readable format (i.e., engineering is completed); the description now explains how the controllers obtain the software.

In a first phase, deployment computer 100 - that is external to the controllers - transfers installation instructions to the controllers (arrow to the right). As a result, controllers 200-1, 200-2 and 200-3 obtain controller software needed to control the operation of system 300. Staying with the example, controller 200-1 turns into the valve controller, controller 200-2 into the tank controller and controller 200-3 into the heater controller.

In typical situations, some software is pre-installed on the controllers, and the instructions 210* comprise delta software that makes the controller software complete. Also, in typical situations, the instructions 210* instruct the controllers to obtain software in a combination of control logic CL (for the function of the controller in the system) and an execution engine (for abstracting from different operating systems that are installed on the controllers).

In a second phase, the controllers 200-1, 200-2 and 200-3 execute the controller software and thereby control the operation of system 300 (i.e., the technical system). In the FIG. 1 example, the liquid in tank would stay within pre-defined volume and temperature limits.

The phases are called "software deployment" or "software installation" (first phase) and "controller operation" (second phase). For convenience, the phases can be shortened to "installation" and "operation". This separation in the terminology is convenient for explanation, but repeating the installation during operation is possible, at least by partially re-installing software.

Optionally, the installation comprises virtualization, this being a sub-phase. Instead of transferring instructions 210* to the controllers, deployment computer 100 sends instructions 201* to virtualization system 600 (illustrated on the left side, arrow left-going). Virtualization system 600 performs pre-defined tests (that emulate system 300). During the tests, virtualization system 600 uses the above-identified data-structures 550/560 (cf. FIG. 1). If the tests comply with pre-defined conditions (e.g., pre-defined operation of the system in emulation, numeric values for volume and temperature within the limits), deployment computer 100 subsequently transfers instructions 210* to the controllers, as described.

If virtualization is used, the installation phase is distinguished into a sequence of emulation and transfer. Emulation can be repeated (e.g., until the tests are complied with).

In implementations, system 600 comprises virtual machines (VM) that correspond to the controllers. In the example, VM 500-1 corresponds to controller 200-1, VM 500-2 to controller 200-2, and VM 500-3 to controller 200-3. Correspondence is defined by having the VMs set up with hardware attributes (such as memory, CPU etc.) and software attributes (such as operating system etc.), with details explained below. The software to implement virtual machines is commercially available. Computer systems that host VMs are commercially available as well. The host can be implemented as physically a single computer (e.g., on an engineering workstation computer). This is convenient for explanation, but those of skill in the art can even use VMs that are implemented on remote server (usually called "cloud servers"). For example, hosted VMs are commercially available through data centers operated by Microsoft Corp. (AZURE), Oracle Corp. (ORACLE CLOUD) and others.

System 600 also comprises data-structures 550/560 (cf. FIG. 1) that represent the behavior of the equipment. FIG. 2 illustrates data-structures 550/560 as a module in communication with all 3 VMs, but separate modules can be used as well (e.g. one module with structures 550-1, 550-2 and 550-3 and one module for structure 560). It is noted that module 550/560 is independent from the VMs, except data-format conventions that let the modules and the VM exchange data, during virtualization.

The correspondence between controllers and VMs reflects constraints that are controller-specific (e.g. in terms of hardware and in pre-defined software). The instructions to the VMs and to the controllers are substantially the same (cf. 210* in both). The person of skill in the art can introduce exceptions, by using different communication settings (e.g., ports, IP-addresses), but the exceptions are not related to the function of the controllers (and to the VMs).

In implementations, deployment computer 100 and virtualization system 600 (with the VMs) can be located on a single physical computer.

The pluralities of the controllers in system 300 can be regarded as operations nodes of system 300. In real implementations, the number of controllers is much higher (than N = 3). Although the controllers are illustrated together with equipment components (cf. the symbols in FIG. 1), the controllers can control the function of other equipment. For example, a controller can be part of a human machine interface (HMI) that let operator users see status information of system 300 in operation. Such interfaces need to be configured as well. In a further example, the controllers can be communication devices, such as network devices that provide communication between controllers (and to/from equipment components).

The description investigates constraints that are related to the installation, and the description explains how deployment computer 100 mitigates these constraints. To enhance understanding, the description sometimes explains features of the controllers in general and uses illustrative usage scenarios. The description explains the constraints separately. It is noted that the computer deals with constraints in their complexity.

For convenience of explanation, the description frequently looks at one controller (reference 200) and at one VM (reference 500).

### Overview of a deployment computer and of a controller

### 3 and 4

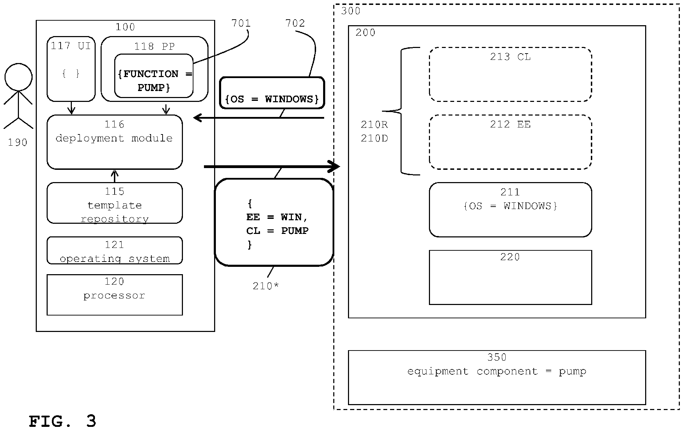

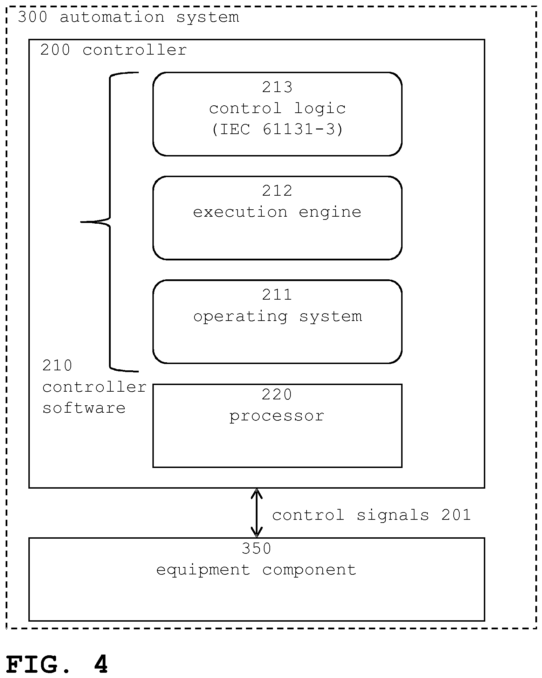

FIGS. 3 and 4 illustrate an overview of controller 200 that is part of system 300. FIG. 3 also illustrates deployment computer 100 that is coupled to controller 200.

FIG. 3 focuses on data-structures such as function indicators 701, status indicators 702, and installation instructions 210*, by way of example, during the installation phase. FIG. 4 focuses on hardware and software of the controller during the operation phase.

In the following, the description leaves out the "deployment" and "automation" terms and simplifies to computer 100, controller 200, and system 300.

The figures are simplified in many aspects as well. While the systems usually comprise multiple controllers, FIGS. 3-4 stay with one controller.

During operation (FIG. 4), controller 200 exchanges signals 201 with technical equipment 350 and thereby controls one or more particular functions of system 300 (cf. the double-arrows in FIG. 1). Signals 201 (and thereby the control) depend on controller software 210 (that has been installed). Again, the figure is simplified, a single controller can exchange signals with multiple equipment components.

During installation (FIG. 3), computer 100 receives indicators 701 and 702. The indicators are data-structures with attributes.
a) In function indicators 701, the attributes identify functions that controller 200 has to implement within system 300.
b) In status indicators 702, the attributes identify a current status of controller 200. Status indictors 702 can be software status indicators 702-S, hardware status indicators etc. As illustrated by dashed lines, prior to installation, some software components are missing in controller 200. An indicator would have the attributes. In the example, indicator 702 (actually for software status) indicates the availability of WINDOW as the OS. Indicators can also indicate the absence of something (in the example, {EE not} and {CL not} would be indicators as well).

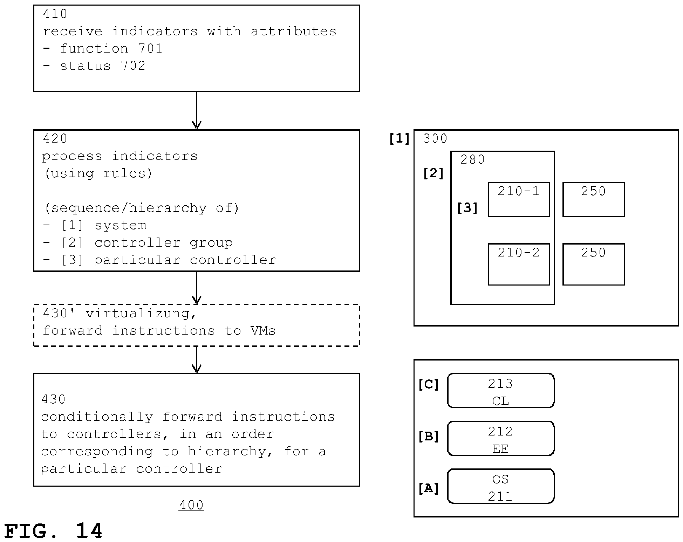

By executing a computer-implemented method (cf. FIG. 14):
- computer 100 receives the attributes (at least of indicators 701, 702-S),
- computer 100 applies pre-defined rules to process the attributes and thereby identifies software components that are required by the controller, required software 210R in the following, and
- conditionally on the status of controller 200, computer 100 forwards installation instructions 210* to controller 200 so that controller 200 is able to obtain delta software 210D to complete the missing components.

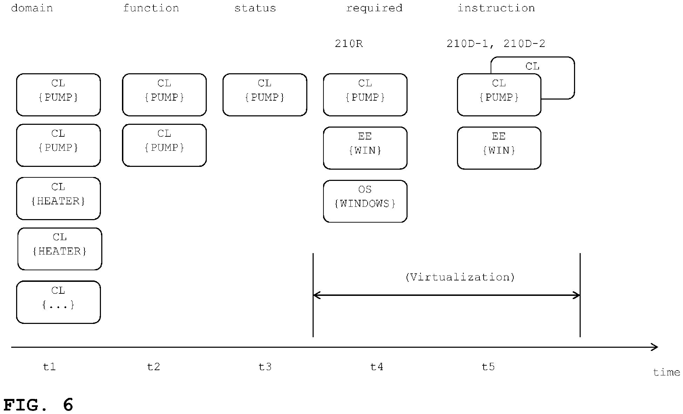

In the example of FIG. 3, required software 210R and delta software 210D are the same. Differences will be explained below, for example in connection with FIG. 6.

Taking the execution of the method as the reference,
- function indicators 701 are indicators to the future, i.e., to the operation phase, and
- status indicators 702 are indicators to the present (i.e., prior to installation).

During installation, some of status indicators 702 do change (i.e., software indicators 702-S), but some indicators (such as hardware indicators) can remain unchanged.

Instructions 210* enable controller 200 to obtain delta software 210D. There are two options:
- Instructions 210* identify the delta software 210D, by links or other pointers, and controller 200 down-loads delta software 210D from a repository (that can be part of system 300, not illustrated).
- Instructions 210* comprise delta software 210D (e.g., software that is being compiled by computer 100 and that is not available in a repository).

The installation phase therefore comprises:
- computer 100 executing the method to forward instructions 210* to controller 100, and
- controller 200 obtaining delta software 210D (at least partially) according to the instructions.

In the overview of FIGS. 3-4, delta software 210D makes controller software 210 complete.

### Type of constraints

The identification (i.e. selection and adaptation) of required software 210R and of delta software 210D depends on a variety of factors that impose constraints. For convenience of explanation, the description classifies the constraints into different types.
- System-specific constraints are applicable to system 300 as a whole (such as a domain of the system).
- Controller-specific constraints are applicable to particular controllers (such as hardware and software).
- Controller-group specific constraints are applicable to particular groups of controllers (in terms of hardware and software).
- Interaction-specific constraints are applicable to the interaction between controller and equipment (such as to implement a particular function) and/or to the interaction between controllers. Interaction-specific constraint can also be seen in the interaction between controller groups and equipment.

As it will be explained below (FIG. 14), computer 100 differentiates between the types. There are priority rules in processing indicators (function indicators 701 and status indicators 702). Indicators with higher priority are processed earlier than indicators with lower priority. Taking processing priorities into account can be advantageous in reducing complexity, and in speeding up the processing.
- System-specific indicators (e.g., indicators with the domain attribute) have higher priority than controller-group specific indicators.
- The (optional) controller-group specific indicators have higher priority than controller-specific attributes.

### Controller

Controller 200 (cf. FIG. 4) can be physically implemented by several rail-mounted modules (e.g., on a DIN-rail, with separate modules, such as a processor unit, a communication module, a communication interface, a power supply module and other supporting devices). For example, controller 200 can be a controller of the AC 800M series being a Programmable Automation Controller (PAC). The AC 800M series is commercially available from ABB.

As used herein, controller 200 is understood to be a programmable controller. The function of the controller is determined by controller software 210, and the function can be modified during the life-time of the controller (by instructions 210* or otherwise). A programmable controller is different from controllers that have all the logic implemented, for example, by a Field Programmable Gate Array (FPGA), and application-Specific Integrated Circuit (ASIC).

Although controller 200 is illustrated in connection with equipment component 350, the controller can also operate, for example, as a communication device in a network or as a HMI (see above). Controller 200 can also be an integral part of equipment 350 (embedded controller). But also in this case, there are control signals 201.

As in FIG. 4, controller software 210 for controller 200 can be differentiated into several layers, such as
- operating system (OS) 211
- execution engine (EE) 212
- control logic (CL) 213

It is noted that the EE is an optional component. However, using an EE is convenient for a number of reasons, among them the advantage of abstracting from different OS.

Controller software 210 is usually stored on permanent memory (e.g., SECURE DIGITAL (SD) card memory in case of the AC 800M). Other software - not illustrated here - can comprise firmware, the BIOS etc.

As mentioned, during the operation phase, controller 200 exchanges signal 201 with equipment component 350. Controller 200 can perform other activities, such as sending data to different recipients, such as to further equipment. Controller 200 is designed to operate in real-time, so that it processes signals without substantial delay. In operation, controller 200 and equipment component 350 are located on the industrial site where the industrial processes are performed, such as in a plant or in a factory.

In case of virtualization, real-time properties remain unchanged. The person of skill in the art can implement virtualization system 600 to apply the same timing as in reality (e.g., emulating the heater by taking a couple of hours to heat up the tank), but frequently, system 600 will apply a different timing (i.e. so-called "virtual time"), so that emulation speeds up (e.g., emulating the hour-long heating-up operation with only seconds of computer time).

### Deployment computer

As in FIG. 3, deployment computer 100 comprises processor 120 collectively standing for a memory unit, a processing unit, input/output devices and other hardware that is usually available in a computer. Computer 100 has operating system 121 (e.g. WINDOWS) and - based on that - computer 100 implements a number of modules that are adapted to perform the method (in FIG. 14) . In other words, computer 100 performs a method to enable the installation of controller software to controller 200. The modules are:
- template repository 115 (i.e. a library with templates),
- deployment module 116,
- user interface 117 (i.e., a module that provides a human-machine-interface HMI to interact with computer 100), and
- project plan (PP) repository 118 (cf. the data-structures 550/560 introduced above).

While the figure illustrates computer 100 by a single box, implementations of computer 100 can be distributed across multiple physical computers. Those of skill in the art can allocate modules to physical computers without the need of further explanation herein.

Prior to executing the method, computer 100 has obtained templates (for finalizing controller software 210) from template repository 115. In other words, obtaining templates is not necessarily to be performed during the execution of the method.

The (uni-directional) arrows going to deployment module 116 illustrate data that computer 100 can receive and can process during the execution of the method. As herein, computer 100 receives the data in form of data-structures, hereinafter also "indicators".

### Origin of the Indicators

In principle, computer 100 can receive function indicators 701 and status indicators 702 via user interface 117 from user 190, being an expert user in the role of the above-mentioned control engineer. Computer 100 can receive indicators 702, 702 also from project plan repository 118, usually with a specification of system 300 (the "project" as introduced in FIG. 1).

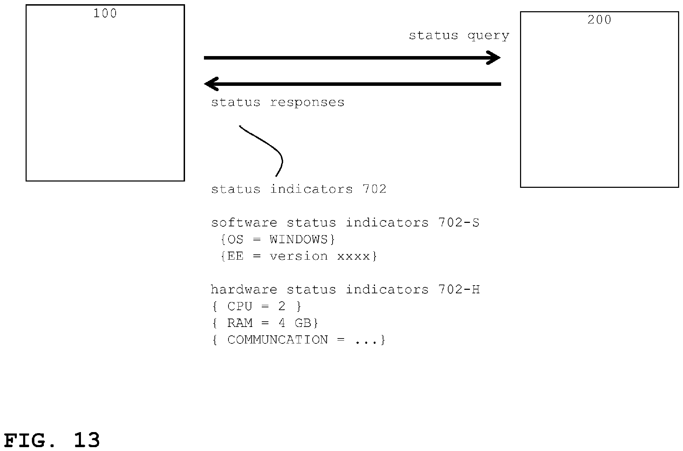

However, computer 100 can receive some of status indicators 702 from system 300 (and/or its components) directly via data transmission, through activities that are called interrogation. Details are explained below in connection with FIG. 13.

Interrogation is suitable for computer 100 to receive:
- the controller-specific constraints,
- the controller equipment interaction specific constraints, and
- the controller-to-controller interaction specific constraints.

Computer 100 receives the system-specific constraints from project plan 118, or from user 190. Persons of skill in the art can deviate from this indicator origin, but the origin as explained herein limits complexity (here by optimizing for least possible user interaction).

### Instructions from deployment computer to the controller as part of the installation

As in FIG. 3, once computer 100 has identified instructions 210*, deployment computer 100 transfers instructions 210* to controller 200. This transfer is illustrated by an arrow to the right (i.e., standing for one of the last steps of the method). It is noted that a single instruction 210* can be for different software components (such as layers) so that the instructions combine or bundle the software installation. The figures illustrates combining EE with CL.

At least during this transfer, both computers i.e. computer 100 and controller 200 are communicatively connected, at least in the arrow direction. Connections are known in the art (e.g., via network) and therefore not further explained. It is noted that a connection can also be established by physical data carriers, such as memory cards (e.g., a non-volatile memory card in the format Secure Digital (SD)).

Once installed on computer 200, controller software 210 determines how controller 200 interacts with technical equipment 350 (i.e., through signals 201, cf. FIG. 4). Two controllers with equal hardware but with different controller software 210 will operate differently.

In case that virtualization is used, computer 100 sends instructions to the VM, as CL only, as EE/CL in combination, or otherwise. The VMs become virtual controllers that send "signals 201" (i.e., data) to data-structures 550/560.

### Installation sequence

Controller 200 does not yet have to be connected to equipment and even does not have to be located within the plant.

The installation in general usually follows a sequence by that OS 211 is installed first, EE 212 is installed second, and CL 223 is installed third (deployment sequence OS, EE, CL).

Layers 211, 212, 213 are different in various aspect, such as in the following:
- the modalities how a particular software layer is selected for installation, and
- the opportunities to configure and program the controllers, during installation

The different aspects are being related to the mentioned constraints (to be explained with more details below). Also, during the execution of the method, computer 100 receives indicators 701, 702 (cf. FIG. 3) with attributes. Computer 100 processes them, makes the selection and adaptation, and instructs the controller(s) to install the identified software component (via the instructions). A software component that has been installed to a controller by a computer other than computer 100 and prior to execution of the method 400 is a "pre-installed" software component.

Operating system 211 is commercially available (e.g. WINDOWS, LINUX, VxWorks). It is assumed that the OS has already been installed (i.e., already deployed) to controller 200, so that executing the method does not install or remove the OS. In other words, the OS is usually pre-installed. It is however contemplated to use instructions 201* to modify or update the OS.

Execution engine 212 is usually specific to a particular OS. EE 212 operates on top of OS 211. EE 212 can be considered as a run time environment (RTE) for the CL. Computer 100 sends instructions 210* to controller 200 and controller 200 installs code accordingly. For example, for a controller with WINDOWS as the OS, the EE can be a computer file (or a file collection) in formats such as EXE (executable file) and/or DLL (dynamic-link library). It is also possible that computer 100 compiles the file with parameters that take the specifics of the controller into account. Computer 100 than forwards the compiled EE to controller 200 as part of instructions 210*.

Execution engines 212 can be pre-installed as well. In implementations with controller 200 belonging to the AC 800M series, the execution engine can be commercially available, from ABB, as ControlCore.

Control logic 213 can be written in a programming language that is standardized ("Programmable controllers - Part 3: Programming languages (IEC 61131-3:2013)). The standard specifies the language in a variety of conventions, among them syntax and semantics, the definition of variable and declaration etc. Control logic 213 comprises instructions that determine the control function of the controller, to make the controller programmable. (These "instructions" are not the 210* instructions). Most of the control logic is written by humans. For example, an AC 800M controller can be programmed with the help of the "Compact Control Builder" being a tool for engineering the control code.

It is noted that instructions 210* to install the OS, the EE or the CL do not necessarily correspond to layers OS 211, EE 212 and CL 213 completely. Some of the instructions can be sub-sets of theses layers.

### Usage scenarios with different contexts

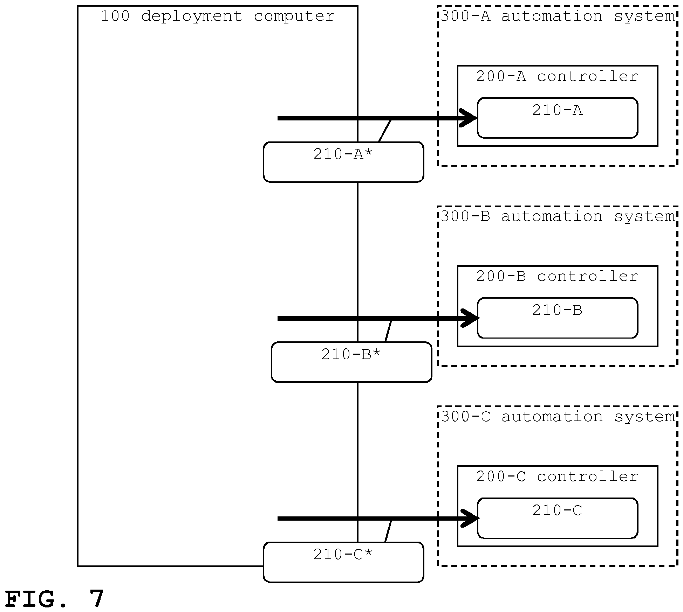

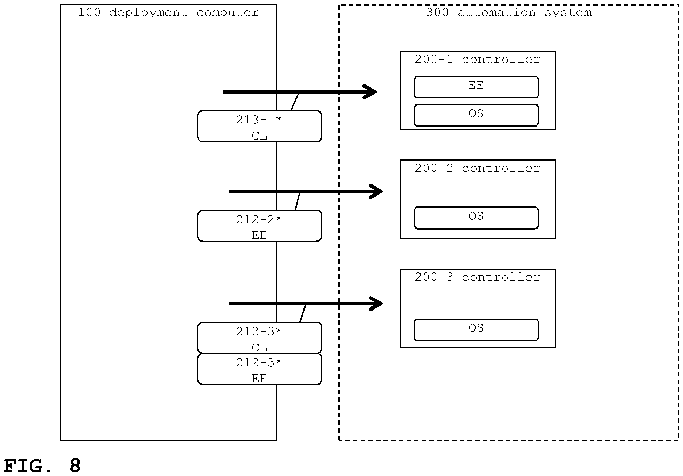

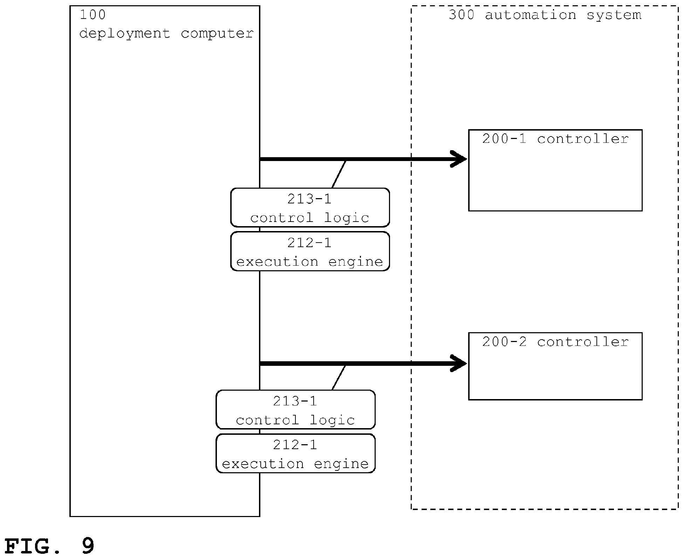

Before explaining details of the method, the description places the controller into various usage scenarios. The scenarios are selected to explain the constraints that need to be considered by performing the selection. For didactical reasons, the constraints will be introduced separately, but it is noted that constraints usually occur in combination, this adding complexity (for the selection). The constraints can be differentiated, for example, into:
- Domain constraint, by using controllers with software in different domains (FIG. 7), but with domain-specific details.
- Granularity constraint, performing the method for multiple controllers, and/or with different layers to be installed (cf. FIG. 8)
- Platform constraint, performing the method under consideration of the hardware and/or software that is pre-installed (cf. FIG. 6).
- Hardware constraints (cf. FIG. 9)
- Testing constraints, and others.

Constraints usually occur in combination (not all at the same time), thus increasing complexity (for the selection). In case of virtualization, the complexity can be reduced by using VMs 500 and data-structures 550/560 for some constraints only. Compared to the real world, testing is faster.

Some of the constraints are related to the (future) use of the controller in a particular system (during operation, cf. FIG. 4), and such constraints can be summarized as "application context". The various settings (and options of the controllers) contribute to constraints. The figures concentrate on particular constraints (such as domain, target platform) and show the controllers in settings that correspond to different attributes.

### Attributes in the indicators

While the figures focus on single constraint attributes (one figure per constraint), real implementations show a rather a complex multi-variate combination of attributes. In the following, the attributes are noted in combination with data-structures that computer 100 uses to represent the attributes, i.e. the indicators.

Persons of skill in the art can represent an attribute by various techniques, such as mark-up language notation. For example, the notation {OS = WINDOWS} has equivalents in

```
<OS> WINDOWS </OS>
 <Operating System> WINDOWS </Operating System>
```

This means that a particular controller has OS 210 implemented by WINDOWS, or that OS 210 is to be implemented by WINDOWS.

### Plurality of controllers

### 5

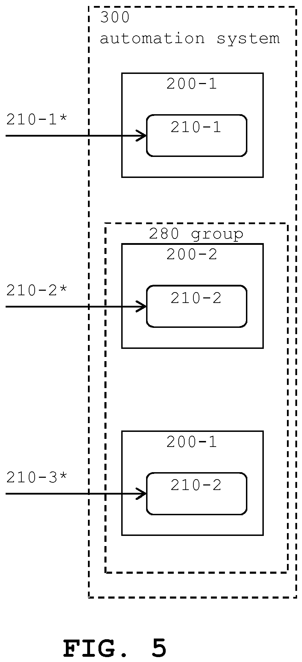

FIG. 5 illustrates system 300 with a plurality of controllers 200-1, 200-2, and 200-3 (collectively 200). During installation, the controllers receive instructions 210-1*, 210-2*, and 210-3*, respectively so that during operation the controllers have controller software 210-1, 210-2 and 210-3, respectively. For simplicity, delta software is omitted.

The number of N=3 controllers is a simplification, but for convenience of explanation and in reference to the FIG. 1 example, it can be assumed that there is a controller for the valve, a controller for the heater and a controller for the tank.

The controllers are assumed to be different, at least in some of the constraints that are explained in the following.

The dashed rectangle symbolizes group of controllers 280 (e.g. controllers 200-2 and 200-3) for that at least some of the constraints are equal.

In case of using virtualization (during installation, cf. FIG. 1), one controller can be virtualized by one virtual machine, cf. FIG. 1.

### Selection sets

### 6

FIG. 6 illustrates the process of selecting software by way of example, at particular points in time. The figure illustrates software components by rounded rectangles. This notation also symbolizes that computer 100 can visually represent software components to the user, for example in user interface 117 (cf. FIG. 3).

At time point t1, computer 100 has received an indicator with an attribute for a particular domain, being system-specific. In a first set, computer 100 identifies CL for that domain (e.g., with CL for pumps, heater and other equipment "..." used in chemical industry).

At time point t2, computer 100 has received a function indicator (701 in FIG. 3) with the attribute {PUMP}. This indicator limits the first set to a second set (e.g., CL for pumps in chemical industry).

At time point t3, computer 100 has received a status indicator (702 in FIG. 3). As a consequence, computer 100 limits the second set further to a third set (e.g., CL for pumps in chemical industry, but running on controllers by a particular manufacturer).

At time point t4, computer 100 has identified software components that are required (to perform the function), i.e. components 210R. In the example, this comprises the CL (of the third set) in combination with an EE and an OS. In the example, there is an assumption that the EE runs on the OS WINDOWS.

At time point t5, computer 100 has identified software components that are to be installed: the above-mentioned delta software 210D. In the example, the identification is controller-specific with instructions 210-1* to install the CL and the EE on a first controller, and with instructions 210-2* to install the CL on the second controller (that already has the EE). In case that required software is already installed, it does not have to be re-installed. Delta software 210D is therefore a subset of required software 210R.

In case of using virtualization (during installation, cf. FIG. 1), the instructions to the VMs of visualization system 600 can be for required software 210R (after t4) and/or for the delta software 210D. This is applicable for time points t4 and t5. In the first case (t4), system 600 can test the software completely, and in the second case (t5) the software status of the controllers (i.e., the presence or absence of particular software layers) can be taken into account.

### Further constraints in general

As mentioned above, the constraints result from a large variety of properties. The description now discusses some of these properties in view of how the properties influence the installation. In other words, the constraints result from properties that computer 100 has to be taken into account during installation. As the discussion can't cover all potential constraints, it refers to the different constraint types by way of example.

### Domain as a system-specific constraint

### 7

FIG. 7 illustrates a plurality of systems 300-A, 300-B and 300-C in different domains A, B and C, respectively. For example, the domains can be
A chemical industry (with continuous processes),
B paper manufacturing industry, and
C power plants.

Domains are application areas in that system 300 is used. As the controllers are programmable, they can be used in different domains, as illustrated as controllers 200-A, 200-B and 200-C with different controller software 210-A, 210-B and 210-C, respectively. Therefore, the controller software to be installed is different for each domain.

Depending on the mentioned domain, the technical equipment is usually different. To give some examples, in chemical industry (domain A), the technical system can be a chemical reactor with components such as valves, tanks, heaters, pumps (cf. the FIG. 1 example), coolers, sensors, security devices such as emergency cut-off switches, and others.

To provide an example for the technical equipment (cf. 350 in FIGS. 1, 2, 4), controllers 200-A, 200-B and 200-C could implement control loops that keep the temperature of a substance or process within predefined borders (i.e. at particular set-points). To give some examples, in domain A, this could be the temperature of the liquid in the tank; in domain B this could be the thickness of paper; in domain C this could be a voltage.

To stay with the example in A, the controller receives a measurement signal for the temperature at the input as well as set-point values; and the controller provides a control signal (to heat, not to heat) at the output. As in substantially all control loops, there is a time constant that - simplified - is related to the time it take the controller to react on deviations from the set-point.

The controller can be implemented as a PID controller that continuously calculates an error value as the difference between the set-point and a measured process variable (PV) and applies a correction based on proportional (P), integral (I), and derivative terms (D). But for the following discussion, it is assumed that only the time constant is domain specific.

Further assuming that this time constant is implemented as a variable in the control logic (cf. 213 in FIG. 3), the control logic would have to be available in both versions as control logic for the loop in A, and as control logic for the loop in B.

In other words, there would be domain-specific control logic CL. It is noted that the control logic comprises not only logic for the loop function, but also for other functions.

It is noted that the domain is applicable to a plurality of controllers within system 300 (to that computer 100 forwards instructions 210*). Not all controllers in system 300 need to be differentiated according to the domain. For example, controllers that are configured to function as communication controllers (or communication devices) can be used in multiple domains.

As mentioned, computer 100 can receive indicators for the domain of system 300 through the project plan (cf. repository 118) such as {DOMAIN = A}, or {DOMAIN = CHEMICAL}, {DOMAIN = B} etc. The same principle of using indicators with attributes applies to templates (for control logic) in repository 115.

Since the controller software is different, the instructions 201-A*, 210-B* and 210-C are different as well.

In case of using virtualization, the VMs do not have to be adapted because the domain-specifics are coded into the CL.

### Software Layers as controller-specific constraints

### 8

FIG. 8 illustrates system 300 with a plurality of controllers 200-1, 200-2, and 200-3 in a single system 300 (N=3). The figure also illustrates variability in terms of software layer granularity. Instructions 210* can cause the installation of:
- control logic CL 213 only (e.g. CL 213-1 to controller 200-1)
- execution engine EE 212 only (e.g., CL 213-2 to controller 200-2)
- control logic CL 213 and execution engine EE 212 in combination (e.g., CL 213-3 and EE 212-3 to controller-3).

In the example, controllers 200 have controller software 210 that have been installed previously, such as EE and OS to controller 200-1, OS to controller 200-2 and OS to controller 200-3.

In view of the above-mentioned installation sequence (OS, EE, CL), the software layer granularity can also be considered as an installation sequence constraint. There is a hierarchy, with the OS as the sub-ordinated layer to the EE, and with the EE as the sub-ordinated layer to the CL. The CL is the supra-ordinated layer to EE, and the EE is supra-ordinated layer to the OS.

In general, software in a supra-ordinated layer can only be installed if the sub-ordinated layer has been installed on the controller previously.

The installation of the EE and the CL for controller 200-3 is illustrated in combination, the person of skill in the art can implement the installation such that the particular order (EE first, CL second) is observed.

Software status indicators 702-S can comprise a layer indicator ({LAYER}) that indicates one or more layers of control software 210 that are installed on controllers 200-1, 200-2, 200-3. The layer indicator {LAYER} has attributes with one or more of the following: an operating system attribute ({OS}) that indicates the presence or absence of a particular operating system 211 on the controllers 200-1, 200-2, 200-3, an execution engine attribute ({EE}) that indicates the presence or absence of a particular execution engine 212 (on the controllers 200-1, 200-2, 200-3; and a control logic attribute ({CL}) that indicates the presence of absence of a particular control logic 213 (on the controllers 200-1, 200-2, 200-3). Those of skill in the art can identify a particular OS, EE or CL by version information or the like.

In case of virtualization during installation, the layers OS, EE and CL can be installed to the VMs at different points in time. It is contemplated to have the VM installed with the OS first and to install the CL/EE combination second. Such an approach approximates the controllers in real-world systems 300 for that the manufacturers pre-install the OS, as explained next.

### Platform constraint as controller-specific constraints

### 9

FIG. 9 illustrates system 300 with a plurality of controllers 200-1 and 200-2 that are different. For example, they are different by being manufactured by different manufacturers. The differences can be relevant for the software installation, because
- different manufacturers may use different hardware, and
- different manufacturers may pre-install different operating systems.

Controllers that belong to a particular type series (e.g., AC 800M) can be considered as belonging to the same hardware platform. Likewise, the platform concept can be applied to the OS as well, for controllers of the WINDOWS-platform, for controllers of the LINUX-platform and so on. Platforms can also be differentiated as hardware-software platforms.

It is assumed that the control logic (CL) should be for the same function (e.g., for the above-mentioned loop in domain A) and that the operating systems are different.

Hence the execution engines are different: EE 212-1 and EE-212-2, but control logic 213-1 and 213-2 would be the same. The EE acts as an abstraction layer that lets the same control logic interact with controllers or different (software) platforms.

The execution engine (EE) can be further differentiated into
- an EE is being provided by computer 100 shortly before installation (for example by compiling code to the EE)
- an EE that is being provided from a repository (computer 100 and/or the controllers have access to this).

Installing the EE specific to a particular controller is a measure to react to the mentioned differences.

In case of virtualization during installation, the controller particulars are settings to the VMs. Pre-installation compilation by computer 100 is applicable as well.

### Hardware as a controller-specific constraint

### 10

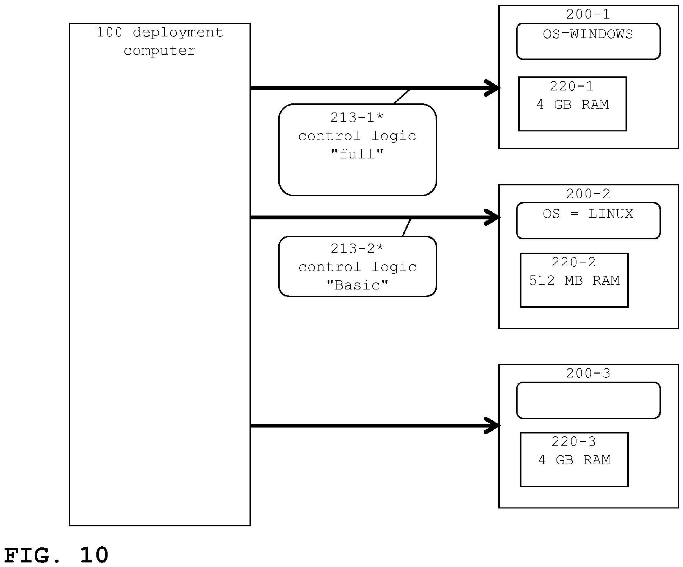

FIG. 10 illustrates deployment computer 100 (left side) and a plurality of controllers 200-1, 200-2 and 200-3. The controllers are different in their hardware.

In the example, the controllers have different operating systems (OS = WINDOWS in controller 200-1, and OS = LINUX in controller 200-2), but they are also different in their computing resources. Computing resources of particular computers can be characterized by parameters and can be communicated to computer 100 via indicators 702 (and attributes) such as:
- the number of processing units (CPUs) in the controller (processing attribute {CPU})
- the clock frequency of the processing units ({CPU} as well},
- the memory amount in the RAM memory (memory attribute {RAM})
- the memory amount in the non-volatile memory to that the controller has access (storage attribute {STORAGE})
- the communication availability of the controller to communication via networks, in terms of bandwidth, protocols (e.g. MODBUS, PROFIBUS, Fieldbus), given in a communication attribute {COMMUNICATION}.

In the figure, the attributes are symbolized by different memory amounts in the memory units (e.g., processor 220-1 and 220-3 of controllers 200-1, 200-3 with 4 Gigabyte (GB), processor 220-3 of controller 200-2 with 512 Megabyte (MB), RAM-memory). In the example, the 4-GB-controllers can be considered as a group (cf. 280 in FIG. 5).

The CL for controller 200-1 can be different from the CL for controller 200-2. For example, while the basic function (e.g., controlling a pump) can be the same, the CL for controller 200-1 can have extra functionality, but the CL for controller 200-1 can be limited to the basic function, to deal with the constraint. Therefore, computer 100 will transfer different instructions 213-1* for a "full" version, and 213-2* for a "basis" version.

In case of virtualization during installation, the hardware attributes are settings for the VM. For example, a VM can be set to act as a "thin" controller with {RAM = 512 MB} or as a "standard" controller with {RAM = 4 GB}

### Multiple task constraint as interaction constraint

### 11

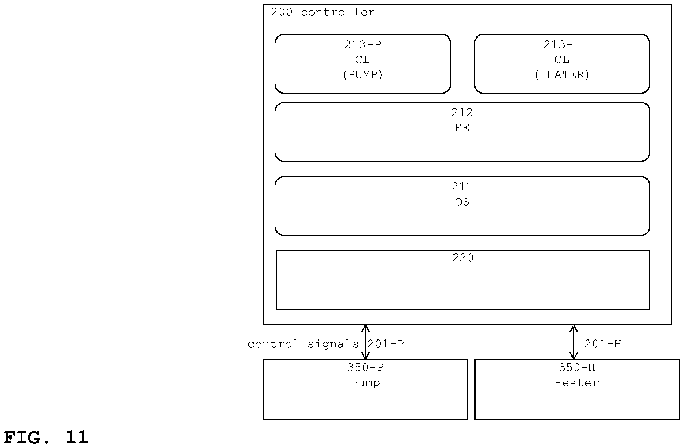

FIG. 11 illustrates controller 200 that controls a plurality of equipment components, in the example pump 350-P and heater 350-H (cf. FIG. 1). The control logics are CL 213-P and CL 213-H, respectively. Both CL are being executed on the same EE (and on the same OS).

There can be conflicts, that can prevent the use of such arrangements, among them the followings:
- The consumption of resources exceeds the limits set by the attributes (cf. FIG. 10, hardware status attributes).
- Signals 201-P and 201-H can be interfering, for example in the sense that the controller can't prepare the signals for one device within pre-determined time limits.

In the example, the heater (or better the control loop) has its time constant to that is sufficiently large to allow the controller to simultaneously control the pump.

In case of virtualization during installation, both CLs can communicate with the VM separately. In other words, virtualization system 600 can use data-structure 550-P communicating with a VM running CL 213-P and can use data-structure 550-H communicating with the same VM running CL 213-H.

### Connection constraint as multi-type constraints

### 12

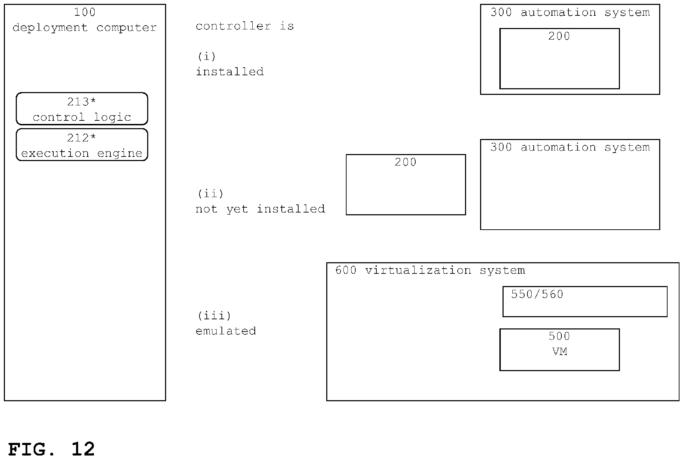

FIG. 12 illustrates deployment computer 100 and controller 200, wherein the relation between controller 200 and system 300 is distinguished into different cases:
(i) Controller 200 is installed (i.e. physically connected) to system 300.
(ii) Controller 200 is not yet installed (i.e. not yet physically connected) to system 300.
(ii) Controller 500 is a virtual module (i.e. a virtual machine 500) in virtualization system 600 (with modules 550/560).

The figure is simplified in that the number of controllers is usually higher. The constraint can have multiple types.

For case (i), computer 100 can operate as described above. Computer 100 can interact with system 300 so that interrogation (cf. FIG. 13) is possible at least partially. For example, computer 100 can interrogate the controllers are already part of the system.

For case (ii), computer 100 can communicate with the controllers (for interrogation, and for transferring instructions) if the controllers are temporarily being connected to computer 100. This approach may be advantageous in having the controllers ready (with the required software components) when they are being installed.

For case (iii), computer 100 interacts with computer 600 (cf. FIG. 1) that applies emulation (as the sub-phase of installation). In this case, computer 100 can be regarded as a tool for virtually commissioning.

In case of virtualization, case (i) (and potentially (ii)) can show a hybrid approach, computer 100 obtains settings by interrogation (cf. FIG. 3, indicator 702, and next figure) and applies the settings in the VMs.

### Interrogation

### 13

FIG. 13 illustrates deployment computer 100 interrogating controller 200 to receive installation attributes. The installation attributes indicate the status of a particular controller prior to installation.

Computer 100 sends a status query to the controllers and receives response with installation indicators, for example
- software status indicators 702-S
- hardware status indicators 702-S, with resources available to a particular controller (cf. FIG. 10)

Deployment computer 100 uses this information for the selection of required software 210R.

In case of virtualization, the attributes can be used as parameters to set the virtual machines. For example, the hardware resource (cf. FIG. 10) can be used as parameters. In such an approach, deployment computer 100 performs interrogating step and subsequently forwards hardware status indictors 702-H relating to the resources of the controllers 200-1, 200-2, 200-3 to the virtual machines 500-1, 500-2, 500-3, respectively, as parameter settings (cf. FIG. 2). This approach ensures that the parameters of VMs correspond to actual hardware status, and minimizes the possibility of errors (e.g., by humans, and/or in the project plan).

### Scenarios

In the following, the description explains exemplary scenarios.

Assuming that a particular industrial site is already equipped with a number X of chemical reactors that include X1 pumps and X2 heaters. There are Y controllers, among them Y1 controllers are to be configured (in the function) to control the X1 pumps; and Y2 controllers are to be configured to control the X2 heaters. There is a one-to-one relation: a single controller should control only one equipment component (i.e., no multiple tasks, Y1 = X1, Y2 = X2). (Some of the controllers outside the Y group are already configured to control other equipment, such as communication devices, being a condition for interrogation.)

There is a need to enable the installation of controller software 210 to each of the Y1 + Y2 controllers. As it will be explained, computer 100 executes the method with (simplified) receiving indicators 701, 702 with attributes, processing the attributes by applying rules and conditionally forwarding instructions 210* to the controllers. This will be explained for the components of computer 100.

Deployment module 116 (cf. FIG. 3) receives an indicator with an attribute for the domain, with applicability to at least some of the controllers in the system. This domain indicator is one of status indicators 702. Domain differentiation is applicable to controllers to control pumps and heaters, but not to communication devices.

In the example, the domain is the chemical domain {DOMAIN = CHEMICAL}. Computer 100 receives this attribute from project plan repository 118 (or alternatively, from the user via user interface 117).

Deployment module 116 also receives an indicator with a granularity attribute, such as {GRANULARITY = CL/ALL, EE/OPTIONAL, OS/NOT}, with applicability to the all controllers in the system. The attributes convey the information that CL should be installed on all Y = Y1 + Y2 controllers, that EE should be installed if needed and that OS should not be installed. In this scenario it is assumed that computer 100 receives the attributes from project plan repository 118.

Deployment module 116 receives function indicators (701) with the attributes {FUNCTION = PUMP} or {FUNCTION = HEATER}, as the case may be. The attributes are different for the X1 + X2 chemical reactors. Deployment module 116 receives the function indicators from project plan repository 118.

As part of the function attributes, deployment module 116 receives indicators that control logic has to be manually modified, by user 190. It is assumed that this indicator is implemented as a flag in template repository 115 (that stores CL templates) {MANUAL MODIFICATION = YES}.

There is no indicator that computer 100 has to interact with the user regarding EE.

Deployment module 116 interrogates system 300 to obtain software status indicators (cf. FIG. 13, 702-S, by computer-system communication 100/300). In the example, indicators comprise the following attributes {PLATFORM = manufacturer α with OS = LINUX) for some particular controllers and with {PLATFORM = manufacturer β with OS = WINDOWS} for other particular controllers. In the example, the distribution of α and β controllers can be arbitrarily.

Based on the attributes that computer 100 has received, deployment module 116 applies the rules. It starts with the rules that are applicable for the highest nodes in the hierarchy. Therefore, module 116 identities a first set of templates (in repository 115) that comply with {DOMAIN = CHEMICAL} and with the CL (i.e., the templates are for CL, not for EE, not for OS). It is noted that the set of templates is for CL in various functions, for pumps, for heaters, for coolers, for sensors etc. Taking the above time constant example, the templates have the chemical specific time constant as part of their logic (if applicable).

It continues by separating the first set of templates into two sub-sets (or groups), one sub-set with CL-templates for pumps, and the other sub-set with CL-templates for heaters. For simplicity, it is assumed that each sub-set contains one element: there is one CL-template for pumps, and there is one CL-template for heaters.

Due to the (positive) manual modification attribute, modules 116 and 117 interact with user 190. This interaction results in modifying the templates (of both sub-sets) to CL that is adapted to the particulars of the various pumps and heaters. The particulars, such as pump speed and temperature settings can be part of the project plan. The user modifies the CL for the pumps (i.e. max volume flow) and the CL for the heaters (e.g. by setting min/max temperatures). As a consequence, the CL is identified, specialized for each of the X1 + X2 controllers.

As explained above, controller software 210 has to comprise the layers OS, EE and CL. Assuming (for simplicity) that a CL can only be installed on top of an EE, module 116 processes the software status indicators. It is noted that the above-mentioned interrogation can be performed prior or after the identification of the CL.

Processing the attributes (of this indicator) follows the top-down sequence again. Module 116 checks the availability for suitable EE for OS = LINUX, and for OS = WINDOWS, in repository 115. It then checks the compatibility of the CL for these EE. The attribute of the manufacturer is redundant and can be ignored.

Going deeper in hierarchy, module 116 combines CL and EE for the particular controllers:
- The X1 controllers have CL for (particular) pumps in combination with a (non-particular) LINUX-compatible EE, or CL for (particular) pumps in combination with a (non-particular) WINDOWS-compatible EE.
- The X2 controllers have CL for (particular) heaters in combination with a (non-particular) LINUX-compatible EE, or CL for (particular) heaters in combination with a (non-particular) WINDOWS-compatible EE.

The procedure finishes with forwarding the instructions to the controllers. In the example, computer 100
- sends copies of the LINUX-compatible EE and of the WINDOWS-compatible-EE to a repository within system 300,
- sends repository links to all controllers (XI, X2), and
- sends the CL to the particular controllers.

### Testing

As for industrial sites, testing the functionality of the controller is mandatory. The control engineer - in the role of a test user - will benefit from the installation that computer 100 performs as described. Looking at FIG. 9, case (iii) can have the advantage that computer 600 avoids testing with real equipment.

In case of virtualization, using the VMs is one option to perform the test. Compared to testing in real-world situation (such as in FIG. 12, case (i)), testing with VMs can be performed within shorter time. There is no risk that equipment is being damaged.

### Considerations

Having described computers and controllers, constraints, method steps by overview and by examples, the person of skill in the art can implement the teachings herein.

The person of skill in the art understands how to implement details. As interrogating the controller for status indicators (software, hardware) requires response functionality, the skilled person can use functionality of the OS (of the controllers) and/or can add software tools that respond to the query.

Deployment computer 100 can be implemented such that modules 115, 116, 117, 118 (cf. FIG. 3) are all installed on the same physical computer. In that sense, the functionality of computer 100 is self-contained.

If computer 100 is implemented as mobile device, the software of computer 100 (i.e. for the modules) can be considered as an "app" or "application". Similar terminology can be applied to controller software 210, with CL being the "app" that defines the controller's function.

Control engineers can to write control logic CL for the controllers of an industrial site without using templates or other reusable code. Such a "from scratch" approach give the engineers many degrees of freedom. The described approach still allows the engineers to adapt the CL (or the EE or even the OS), cf. the example of control loop settings, but at the same time, computer 100 keep adaptations within limits.

Complexity aspects have been explained above in connection with the constraints. Using computer 100 allows identifying controller logic 210 (required software 210R, or delta software 210D) that fits to the requirements of the controller's function (cf. functional indicators 701).

The approach can be advantageous of re-using software components. Having a software component installed on a controller in a system that is operating (cf. FIGS. 2 and 4, operation phase) can be considered as a test. Taking the tank controller (FIG. 1, tank 350-2, controller 200-2) as an example, the software components (e.g., CL) can be migrated to a further tank controller that controls a different tank. Only some settings need to be modified (such as the rated volume of the different tank), in data-structure 550-2 (cf. FIG. 1) and/or in the CL.

For programming module 550/560, the person of skill in the art can use object-orientated techniques. The components would be represented by pre-defined objects. As in FIG. 1, there would be valve object 550-1, tank object 550-2, heater object 550-3, pump object 550-4 etc.

### Method

### 14

FIG. 14 illustrates computer-implemented method 400 for updating controller software 210 of the (plurality of) controllers.

Method 400 enables the installation of controller software 210 to a plurality of controllers 200-1, 200-2, 200-3. As explained above, the plurality of controllers are computers adapted to control the operation of automation system 300 according to controller software 210-1, 210-2, 210-3. Method 400 is being performed by deployment computer 100.

In step receiving 410, the computer receives installation indicators 701, 702 with attributes. There are a) function indicators 601 with function attributes (e.g., {FUNCTION = PUMP}, {FUNCTION = HEATER}). The function attributes identify functions that the controllers have to implement within 300. There are b) software status indicators 702-S with software status attributes (e.g., {OS = WINDOWS}, {OS = LINUX}). The status attributes identify a current status of the controller software 210 in the plurality of controllers 200-1, 200-2, 200-3.

In step applying 420 a plurality of rules, the computer applies the rules to process function attributes 701 and software status attributes 702-S, to identify at least one software component 210R (e.g., {CL = PUMP, EE = WIN}) that is required by controllers 200-1, 200-2, 200-3 to implement the functions. Computer 100 applies the rules in a hierarchical sequence starting with attributes of system 300 and ending with attributes for particular controllers 200-1, 200-2, 200-3. In the example of the figure, a first hierarchy with [1] system 300, [2] controller group 280 and [3] particular controller 200-1, 200-2 etc. prefers processing attributes for components.

In step forwarding 430, the computer forwards instructions 210* to the controllers 200, wherein the instructions enable the installation of the identified software component (210R, e.g., {CL = PUMP, EE = WIN}) on the controllers 200-1, 200-2, 200-3 (different components per controller). Forwarding depends on the availability of the identified software component 210R, (e.g., {CL = PUMP, EE = WIN}) at the controllers 200-1, 200-2, 200-3 according to the status attributes in the software status indicator 702-S.

Optionally, receiving 410 comprises to receive function indicator 701 from project plan repository 118 that stores a project plan for system 300 and that differentiates between controllers 200-1, 200-2, 200-3 (of system 300).

Optionally, receiving 410 further comprises to receive further function indicators through user interface 117 of computer 100 from user 190.

Optionally, receiving 410 comprises to receive software status indicators 702-S by communicatively coupling computer 100 to controllers 200-1, 200-2, 200-3 via a communication link and interrogating controllers 200-1, 200-2, 200-3 (cf. FIG. 13).

Optionally, receiving 410 comprises to receive software status indicators 702 with a layer indicator ({LAYER}) that indicates one or more layers of control software 210 that are installed on the controllers 200-1, 200-2, 200-3.

Optionally, the layer indicator {LAYER} has attributes with one or more of the following: an operating system attribute ({OS}) that indicates the presence or absence of a particular operating system 211 (on controllers (200-1, 200-2, 200-3), an execution engine attribute ({EE}) that indicates the presence or absence of particular execution engine 212, a control logic attribute ({CL}) that indicates the presence of absence of particular control logic 213.

Optionally, receiving 410 comprises to receive hardware indicators, with attributes selected from the following: a memory attribute ({RAM}) that represents the amount of random-access memory that is available to a particular controller, a storage attribute ({STORAGE}) that represents the amount of non-volatile storage memory that is available to the particular controller, a communication attribute ({COMMUNICATION}) that represents the availability of communication of the particular controller by specifying communication bandwidth and/or communication protocols, and a processing attribute {CPU}) that represents the number of processing units of the particular controller.

Optionally, receiving 410 comprises to receive system indicators for a particular system 300, wherein the indicators are applicable to the controllers 200-1, 200-1, 200-1 of the particular by indicating a particular domain A, B, C.

Optionally, forwarding 430 instructions 201* to the controller is performed upon checking compliance of the following: the availability of a sub-ordinated instruction layer on the controllers 200-1, 200-2, 200-3 according to the software status attributes; and the availability of hardware resources, according to at least one of a memory attribute ({RAM}), a storage attribute ({STORAGE}), a communication attribute {COMMUNICATION } or a processing attribute {CPU}. In the figures this is illustrated with a second hierarchy [A] [B] [C] that lets the instructions 210* prefer the OS over the EE and the EE over the CL.

Optionally, computer 100 performs virtualization (cf. FIG. 2), illustrated in the figure by dashed box for optional step 430' virtualizing. Computer 100 instructs a plurality of virtual machines 500-1, 500-2, 500-3 (cf. FIG. 2) to use the software component. The virtual machines 500-1, 500-2, 500-3 correspond to controllers 200-1, 200-2, 200-3, respectively. Virtual machines 500-1, 500-2, 500-3 communicate with module 550/560 that emulates the behavior of the technical equipment 350. Optionally, computer 100 instructs the plurality of virtual machines prior to forwarding 430 the instructions 210* to the one or more controllers 200 (step 430' prior to step 430).

Optionally, virtualizing and interrogating are combined. Computer 100 performs the interrogating step and subsequently forwards hardware status indictors 702-H relating to the resources of controllers 200-1, 200-2, 200-3 to the virtual machines as parameter settings.

FIG. 14 also illustrates a computer program or a computer program product. The computer program product - when loaded into a memory of a computer and being executed by at least one processor of the computer - performs the steps of the computer-implemented method. So in other words, the blocks in FIG. 14 illustrate that the method can be implemented by computer 100 under the control of the program.

### References

- 100: deployment computer
- 117: user interface
- 118: project plan repository
- 116: deployment module
- 115: template repository
- 121: operating system
- 120: processor
- 190: user
- 200: controller
- 210: controller software
- 210*: installation instruction
- 210R: required software
- 210D: delta software
- 280: group of controllers
- 300: automation system
- 350: equipment
- 400: method
- 4x0: method steps
- 500: virtual machine
- 600: virtualization system
- 701: function indicator
- 702: status indicator
- 702-S: software status indicator
- 702-H: hardware status indicator

## Claims

1. Computer-implemented method (400) to enable the installation of controller software (210) to a plurality of controllers (200-1, 200-2, 200-3), wherein the plurality of controllers (200-1, 200-2, 200-3) are computers adapted to control the operation of an automation system (300) according to the controller software (210-1, 210-2, 210-3), the method (400) being performed by a deployment computer (100), the method (400) comprising:
receiving (410) installation indicators (701, 702) with attributes, that are
a) function indicators (601) with function attributes ({FUNCTION = PUMP}, {FUNCTION = HEATER}), wherein the function attributes identify functions that the controllers have to implement within the automation system (300), and
b) software status indicators (702-S) with software status attributes ({OS = WINDOWS}, {OS = LINUX}), wherein the status attributes identify a current status of the controller software (210) in the plurality of controllers (200-1, 200-2, 200-3);
applying (420) a plurality of rules that process
- the function attributes (701) and
- the software status attributes (702-S),
to identify at least one software component (210R, {CL = PUMP, EE = WIN}) that is required by the controllers (200-1, 200-2, 200-3) to implement the functions, wherein the deployment computer (100) applies (420) the rules in a hierarchical sequence starting with attributes of the automation system (300) and ending with attributes for particular controllers (200-1, 200-2, 200-3);
forwarding (430) instructions (210*) to the controllers (200), wherein the instructions enable the installation of the identified software component (210R, {CL = PUMP, EE = WIN}) on the controllers (200), wherein forwarding depends on the availability of the identified software component (210R, {CL = PUMP, EE = WIN}) at the controllers (200-1, 200-2, 200-3) according to the status attributes in the software status indicator (702-S).

2. Method according to claim 1, wherein receiving (410) comprises to receive the function indicator (701) from a project plan repository (118) that stores a project plan for the automation system (300) and that differentiates between the controllers (200-1, 200-2, 200-3) of the automation system (300).

3. Method according to claim 2, wherein receiving (410) further comprises to receive further function indicators through a user interface (117) of the deployment computer (100) from a user (190).

4. Method according to any of claims 1-3, wherein receiving (410) comprises to receive the software status indicators (702-S) by:
communicatively coupling the deployment computer (100) to the controllers (200-1, 200-2, 200-3) via a communication link; and
interrogating the controllers (200-1, 200-2, 200-3).

5. Method according to any of the preceding claims, wherein the receiving (410) comprises to receive the software status indicators (702) with a layer indicator ({LAYER}) that indicates one or more layers of the control software (210) that are installed on the controllers (200-1, 200-2, 200-3).

6. Method according to claim 5, wherein the layer indicator ({LAYER}) has attributes with one or more of the following:
an operating system attribute ({OS}) that indicates the presence or absence of a particular operating system (211) on the controllers (200-1, 200-2, 200-3);
an execution engine attribute ({EE}) that indicates the presence or absence of a particular execution engine (212) on the controllers (200-1, 200-2, 200-3); and
a control logic attribute ({CL}) that indicates the presence of absence of a particular control logic (213) on the controllers (200-1, 200-2, 200-3).

7. Method according to any of the preceding claims, wherein the receiving (410) comprises to receive hardware indicators, with attributes selected from the following:
a memory attribute ({RAM}) that represents the amount of random-access memory that is available to a particular controller;
a storage attribute ({STORAGE}) that represents the amount of non-volatile storage memory that is available to the particular controller;
a communication attribute ({COMMUNICATION}) that represents the availability of communication of the particular controller by specifying communication bandwidth and/or communication protocols; and
a processing attribute ({CPU}) that represents the number of processing units of the particular controller.

8. Method according to any of the preceding claims, wherein the receiving (410) comprises to receive system indicators for a particular automation system (300), wherein the indicators are applicable to the controllers (200-1, 200-1, 200-1) of the particular automation system (300) by indicating a particular domain (A, B, C) of the automation system (300).

9. Method according to claim 1, wherein forwarding (430) instructions (201*) to the controller is performed upon checking compliance of the following:
the availability of a sub-ordinated instruction layer on the controllers (200-1, 200-2, 200-3) according to the software status attributes; and
the availability of hardware resources, according to at least one of a memory attribute ({RAM}), a storage attribute ({STORAGE}), a communication attribute {COMMUNICATION } or a processing attribute {CPU}.

10. Method according to any of the preceding claims, wherein the deployment computer (100) instructs a plurality of virtual machines (500-1, 500-2, 500-3) to use the software component, wherein the virtual machines (500-1, 500-2, 500-3) correspond to the controllers (200-1, 200-2, 200-3) and wherein the virtual machines (500-1, 500-2, 500-3) communicate with a module (550/560) that emulates the behavior of the technical equipment (350).

11. Method according to claim 10, wherein the deployment computer (100) instructs the plurality of virtual machines prior to forwarding (430) the instructions (210*) to the controllers (200).

12. Method according to any of claims 4-10, wherein the deployment computer (100) performs the interrogating step and subsequently forwards hardware status indictors (702-H) relating to the resources of the controllers (200-1, 200-2, 200-3) to the virtual machines as parameter settings.

13. A computer program product - when loaded into a memory of a computer and being executed by at least one processor of the computer - performs the steps of the computer-implemented method according to any of claims 1-12.

14. A deployment computer (100) for installing controller software (210) to a plurality of controllers (200-1, 200-2, 200-3), the deployment computer (100) being adapted to perform a computer-implemented method (400) according to any of claims 1-12.
